# DEMANDE DE BREVET EUROPEEN

(11) **EP 1 983 171 A1**
(43) Date de publication de la demande: **22.10.2008**
(21) Numéro de dépôt: 08153973.6
(22) Date de dépôt: 02.04.2008
(51) Int. Cl.: F02B 29/04, F28F 27/02

(54) **Echangeur de chaleur pour véhicule automobile**

(30) Priorité: 17.04.2007 FR 0702782
(71) Demandeur: Valeo Systèmes Thermiques, 78321 Le Mesnil Saint-Denis Cedex (FR)
(72) Inventeur: De Pelsemaeker, Georges, 78125 Pogny-La-Foret (FR); Simonin, Michel, 78960 Voisins-Le-Bretonneux (FR)

(57) **Abrégé**

L'invention concerne un échangeur de chaleur comportant, d'une part, au moins un faisceau d'échange (40) de chaleur déterminant des premiers canaux pour la circulation d'un gaz et des seconds canaux pour la circulation d'un liquide de refroidissement et, d'autre part, un boîtier (46) à l'intérieur duquel est logé le faisceau (40). L'échangeur de chaleur (20) comporte en outre un espace formant une dérivation (54) apte à permettre la circulation du gaz sans échange thermique, le espace (54) étant défini au moins en partie par le boîtier (46).

Application notamment au domaine automobile.

## Description

L'invention concerne le domaine des échangeurs de chaleur, notamment pour véhicules automobiles.

Elle concerne plus particulièrement un échangeur de chaleur comportant, d'une part, au moins un faisceau d'échange de chaleur déterminant des premiers canaux pour la circulation d'un gaz et des seconds canaux pour la circulation d'un liquide de refroidissement et, d'autre part, un boîtier à l'intérieur duquel est logé le faisceau. Un tel échangeur de chaleur est en particulier connu des documents DE 199 02 504 ou FR 2 886 390.

Ce type d'échangeur est notamment utilisé en tant que refroidisseur d'air de suralimentation d'un moteur thermique de véhicule automobile.

Dans ce cas, le gaz à refroidir est l'air de suralimentation qui provient du turbo-compresseur et qui est admis dans le moteur thermique au travers d'un répartiteur d'air. Il est aussi possible que l'air de suralimentation soit un mélange d'air de suralimentation et de gaz d'échappement recirculés. Le liquide de refroidissement est le liquide servant au refroidissement du moteur.

Il est parfois souhaité, notamment pendant les phases de démarrage du moteur ou pendant la phase de régénération du filtre à particules, que l'air issu du turbo-compresseur ne soit pas refroidi. Il faut donc empêcher l'air de suralimentation de circuler dans l'échangeur de chaleur.

Ainsi, il a été proposé de munir les circuits d'air d'admission d'une dérivation qui permet de court-circuiter le refroidisseur d'air de suralimentation.

Dans un tel cas, la dérivation est une conduite qui est ajoutée sur le circuit d'air d'admission. Elle va permettre une liaison directe entre le turbo-compresseur et les différents collecteurs d'admission des têtes de cylindre d'un moteur. Ce qui occasionne des composants additionnels coûteux sur le circuit d'air d'admission.

L'invention vise à améliorer la situation.

Elle propose à cet effet un échangeur tel que décrit auparavant qui comporte, en outre, un espace formant dérivation et qui est défini au moins en partie par le boîtier. Cette dérivation est apte à permettre la circulation du gaz sans échange thermique.

Ainsi, la présence de cette dérivation ne nécessite pas de composants additionnels. Le circuit d'air est simplifié et son coût réduit.

D'autres avantages et caractéristiques de l'invention apparaîtront mieux à la lecture de la description à titre illustratif et non limitatif d'exemples issus des figures sur les dessins annexés dans lesquels :
La figure 1 représente schématiquement un moteur thermique avec un circuit d'air d'admission.
La figure 2 représente de manière schématique un échangeur de chaleur selon un premier mode de réalisation de l'invention.
La figure 3 représente de manière schématique un échangeur de chaleur selon un deuxième mode de réalisation de l'invention.
La figure 4 représente de manière schématique un échangeur de chaleur selon un troisième mode de réalisation de l'invention.
La figure 5 représente de manière schématique un échangeur de chaleur selon un quatrième mode de réalisation de l'invention.

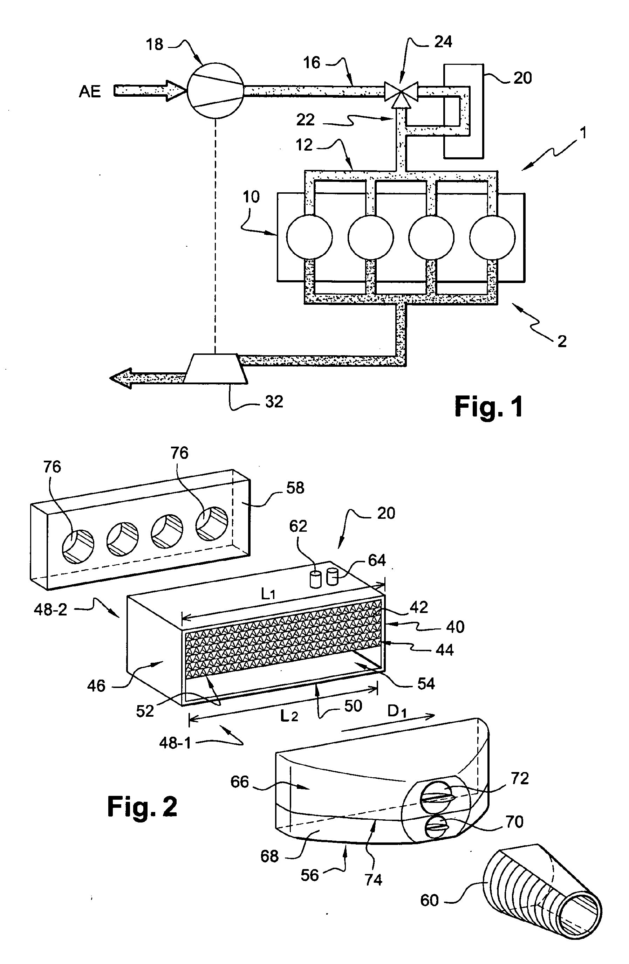

La figure 1 représente un moteur thermique 10, par exemple un moteur de véhicule automobile, comportant un collecteur d'admission 1 et un collecteur d'échappement 2. Le répartiteur d'air d'admission 12 est alimenté par un circuit d'air d'admission 16, encore appelé ligne d'admission, par de l'air extérieur AE. Ce circuit 16 comprend un compresseur 18 et un échangeur de chaleur 20. L'échangeur de chaleur 20 est ici un refroidisseur d'air de suralimentation.

Le compresseur 18 comporte une turbine 32 disposée dans un circuit d'échappement issu du collecteur d'échappement 14 et propre à être entraînée par les gaz d'échappement issus du moteur.

L'air extérieur AE à la pression atmosphérique est ainsi comprimé par le compresseur 18, puis refroidi par le refroidisseur d'air de suralimentation 20 avant de pénétrer dans le moteur thermique au travers d'un répartiteur d'air 12.

Le circuit d'admission 16 comporte en outre une dérivation 22 qui permet un passage de l'air de suralimentation directement vers le collecteur d'admission 12, c'est-à-dire sans passer par l'échangeur de chaleur 20.

Le circuit comporte aussi un moyen de répartition 24. Ce moyen peut être une vanne, par exemple une vanne trois voies. Ce moyen de répartition permet de répartir l'air suralimenté dans la dérivation 22 et/ou l'échangeur de chaleur 20.

Selon le mode de réalisation de l'invention illustré à la figure 2, l'échangeur de chaleur 20 comprend un faisceau 40 d'échange de chaleur qui, dans l'exemple, est formé, de façon connue de l'homme du métier, par empilement de plaques 42. Le faisceau 40 comporte une entrée et une sortie pour l'air de suralimentation.

Les plaques 42 pourront être, par exemple, des plaques embouties comportant deux bossages munis d'ouvertures. Les plaques 42 sont disposées par paires et les bossages respectifs d'une plaque appartenant à une paire sont en communication avec les bossages respectifs d'une plaque voisine appartenant à une paire de plaques voisines. Ceci permet d'établir une communication de fluide, ici le liquide de refroidissement moteur, entre les paires respectives de plaques.

Le faisceau comporte une plaque d'extrémité 52 dite dernière plaque.

Le faisceau 42 comporte en outre des intercalaires ondulés 44 disposés à chaque fois entre des paires de plaques voisines et brasés aux plaques 42. L'air de suralimentation circule entre chaque paire de plaque.

Autrement dit, le faisceau 40 délimite des premiers canaux pour le gaz à refroidir, dans lesquels sont présents les intercalaires ondulés 44, et des seconds canaux pour la circulation du liquide de refroidissement.

L'air de suralimentation est, ainsi, refroidi par le liquide de refroidissement qui pénètre dans le faisceau 40, par exemple, par une tubulure 62, circule dans les seconds canaux du faisceau pour échanger de la chaleur avec l'air de suralimentation à refroidir et quitte ensuite le faisceau par la tubulure 64.

Le faisceau 40 d'échange de chaleur est logé à l'intérieur d'un boîtier 46. Le boîtier 46 est, notamment, en aluminium ou en alliage d'aluminium.

Dans l'exemple représenté à la figure 2, le boîtier 46 présente une forme parallélépipédique comportant quatre faces pleines dont une paroi dite de fond 50 et deux faces ouvertes 48-1 et 48-2 situées en vis-à-vis l'une de l'autre.

Selon l'invention, l'échangeur de chaleur 20 comporte un espace formant dérivation 54. Cette dérivation est apte à permettre 1a circulation du gaz sans échange thermique et est défini au moins en partie par le boîtier 46. Cette dérivation ou canalisation 54 permet un acheminement direct des gaz dans un collecteur de sortie (décrit plus loin).

La dérivation 54 est réalisée, ici, sous la forme d'un canal unique.

De même que le faisceau 40, la dérivation 54 comporte une entrée et une sortie pour l'air de suralimentation qui, dans ce cas, ne sera pas refroidi.

Un mode de réalisation non représenté propose que la dérivation comporte un moyen de renfort mécanique.

Dans le mode de réalisation représenté à la figure 2, la dérivation 54 est composée par la paroi de fond 50 du boîtier 46, d'une partie des autres faces pleines du boîtier 46 et de la dernière plaque du faisceau 52. La dernière plaque 52 du faisceau est définie comme la plaque du faisceau 40 qui est en vis-à-vis de la paroi de fond 50 du boîtier 46.

Ainsi, le faisceau 40 d'échange de chaleur et la dérivation 54 sont logés dans un unique composant compact ce qui permet de réduire le coup global du circuit d'air d'admission.

Le boîtier 46 est, en outre, muni des deuxdites tubulures 62 et 64 servant respectivement à l'entrée et à la sortie du liquide de refroidissement. Ces deux tubulures sont en communication fluidique avec les seconds canaux pour la circulation du fluide de refroidissement à l'intérieur de l'échangeur de chaleur 20.

Les composants de l'échangeur de chaleur décrits précédemment sont assemblés par brasage. Le brasage est une opération d'assemblage de pièces métalliques au moyen d'un métal d'apport dont la température de fusion est inférieure à celle des pièces à assembler. Ainsi, le métal d'apport fond en assurant une cohésion mécanique et/ou une étanchéité entre les pièces métalliques à assembler.

Le mode de réalisation représenté à la figure 2 permet une gestion du foisonnement du faisceau de l'échangeur de chaleur. On entend par foisonnement, la différence de hauteur du faisceau d'échange de chaleur avant son brasage et la hauteur du faisceau une fois assemblé, c'est-à-dire après brasage.

En effet, lors du passage d'un échangeur selon l'invention dans un four de brasage, le métal d'apport fond pour solidariser les différentes pièces de l'échangeur de chaleur. La hauteur du faisceau va ainsi diminuer.

Le fait d'avoir un ensemble unitaire intégrant le faisceau d'échange de chaleur et la dérivation permet d'absorber le jeu résultant de la fonte du métal d'apport. Ce jeu sera absorbé par la dérivation qui comportera un volume plus grand après passage au four de brasage.

Comme indiqué plus haut, le faisceau 40 et la dérivation 54 comporte chacun une entrée et une sortie pour l'air du suralimentation. Dans l'exemple représenté, les entrées se situent sur une même face ouverte 48-1 du boîtier 46 et les sorties se situent sur l'autre face ouverte 48-2 du boîtier 46, la face ouverte 48-2 étant située en vis-à-vis de la face ouverte 48-1. Chaque face ouverte 48-1 et 48-2 comportent chacune au moins une ouverture qui permet la définition des entrées ou des sorties pour le gaz à refroidir ou non.

La face ouverte 48-2 définit un plan dans lequel les sorties pour le gaz à refroidir ou non sont situées.

Ces deux faces ouvertes 48-1 et 48-2 permettent une interface avec des collecteurs 56 et 58, respectivement, d'entrée et de sortie pour l'air de suralimentation. Ces collecteurs sont munis respectivement d'une tubulure d'entrée de gaz 60 et d'au moins une tubulure de sortie de gaz.

Dans le mode de réalisation particulier représenté ici, le collecteur d'entrée est sous la forme d'une boite collectrice 56.

La boite collectrice 56 est divisée en deux compartiments 66 et 68 prévus respectivement pour la circulation de l'air de suralimentation dans le faisceau 40 et dans la dérivation 54.

Un premier compartiment, situé dans la partie supérieure de la boite collectrice 56 de l'exemple représenté à la figure 2, est un compartiment ou conduit, dit du circuit d'échange 66. Ce compartiment du circuit d'échange permet une communication entre la tubulure d'entrée de gaz 60 et le faisceau d'échange de chaleur 40.

La boite collectrice d'entrée 56 et plus particulièrement le compartiment d'échange 66 est équipée d'une vanne 72 dite vanne du circuit d'échange, ici une vanne papillon. Cette vanne permet d'autoriser ou d'interdire et/ou de doser le débit du passage de l'air de suralimentation dans le faisceau 40.

Un second compartiment, situé dans la partie inférieure de la boite collectrice 56 de l'exemple représenté à la figure 2, est un compartiment ou conduit dit du circuit de dérivation 68. Ce compartiment du circuit de dérivation permet une communication entre la tubulure d'entrée de gaz 60 et la dérivation 54.

La boite collectrice d'entrée 56 et plus particulièrement le compartiment du circuit de dérivation 68 est équipée d'une vanne 70 dite du circuit de dérivation, ici aussi une vanne papillon. Cette vanne permet d'autoriser ou d'interdire et/ou de doser le débit du passage de l'air de suralimentation dans la dérivation 54.

Les deux compartiments 66 et 68 sont séparés par une cloison 74.

Un mode de réalisation non illustré propose que les deux vannes d'échange 70 et de dérivation 72 soient regroupées en une unique vanne, par exemple du type trois voies. Dans ce cas, la vanne sera placée dans la tubulure d'entrée 60. Elle permettra de diriger l'air de suralimentation, en fonction des besoins du moteur, dans le compartiment du circuit d'échange 66, dans le compartiment du circuit de dérivation 68 ou simultanément dans les deux compartiments.

Dans le mode de réalisation illustré, le collecteur de sortie est réalisé sous la forme d'un répartiteur 58 d'air d'admission pour le moteur qui permet une communication, par l'intermédiaire d'orifices 76, avec au moins une partie des conduits d'admission des têtes de cylindre du moteur.

Ce répartiteur 58 sert d'interface entre l'échangeur de chaleur et la culasse du moteur sur lequel l'échangeur de chaleur 20 est monté. On pourra notamment prévoir des trous pour le passage de vis dans le répartiteur 58 en vue de sa solidarisation avec la culasse du moteur.

Cet élément est aussi connu sous sa dénomination anglaise « intake manifold ». Il est fixé à la culasse de la chambre de combustion.

Les deux collecteurs 56 et 58 pourront être réalisés en aluminium ou en alliage de ce dernier. Dans ce cas, ils pourront être assemblés par brasage au boîtier 46.

Un autre mode de réalisation prévoit aussi que les collecteurs puissent être réalisés en plastique. Dans un tel cas, ils seront assemblés au boîtier par sertissage. L'utilisation du plastique permet de réaliser des tubulures venues de matière du collecteur.

En fonction du régime moteur, les gaz peuvent être refroidis, en tout ou partie, ou pas.

Ainsi, en cas de forte charge du moteur, le gaz à refroidir (c'est-à-dire l'air de suralimentation) emprunte le compartiment du circuit d'échange 66 de la boite collectrice d'entrée de gaz 56 par l'intermédiaire de la tubulure 60, il traverse ensuite les premiers canaux de circulation (canaux comportant les intercalaires ondulés 44) du faisceau 40 pour gagner le répartiteur 58.

Dans un tel mode de fonctionnement, la vanne du circuit d'échange 72 est ouverte de manière à laisser passer l'air de suralimentation, selon un débit donné, dans le faisceau d'échange de chaleur 40. La vanne du circuit de dérivation 72 est, quant à elle, fermée, interdisant tout passage de l'air de suralimentation dans le compartiment du circuit de dérivation 68 de la boite collectrice 56 et la dérivation 54.

En cas de faible charge du moteur, de phase de démarrage du moteur (autrement appelée phase de « warm-up ») ou encore de phase de régénération du filtre à particules, le gaz à refroidir pénètre dans le compartiment du circuit de dérivation 68 de la boite collectrice d'entrée de gaz 56 au travers de la tubulure 60, il circule ensuite dans la dérivation 54 sans subir d'échange thermique avec le liquide de refroidissement moteur et gagne le répartiteur 58.

Dans un tel mode de fonctionnement, la vanne du circuit de dérivation 72 est ouverte de manière à permettre un passage de l'air de suralimentation dans la dérivation 54. La vanne du circuit d'échange 70 est, quant à elle, fermée, interdisant tout passage de l'air de suralimentation dans le compartiment du circuit d'échange 66 et dans le faisceau d'échange de chaleur 40.

Dans des modes de fonctionnement intermédiaires, les deux vannes 70 et 72 peuvent être partiellement ouvertes.

Les deux vannes 70 et 72 peuvent aussi être toutes les deux simultanément fermées. Dans ce cas, il va se produire un étouffement du moteur qui va entraîner son arrêt.

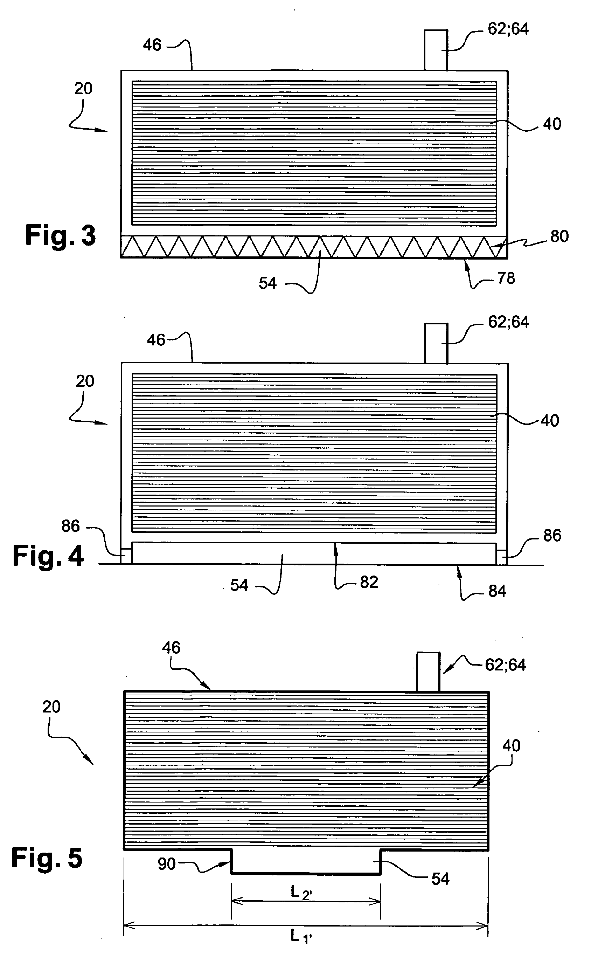

La figure 3 représente un autre mode de réalisation d'un échangeur selon la présente invention.

Dans ce mode de réalisation, le faisceau 40 est identique au faisceau d'échange décrit précédemment.

Le boîtier 46 à l'intérieur duquel est logé le faisceau 40 présente de cinq faces, à savoir trois faces pleines et deux faces ouvertes situées en vis-à-vis l'une de l'autre. Les trois faces pleines donnent au boîtier une forme en U.

Dans ce mode de réalisation, la dérivation 54 forme un couvercle pour le boîtier 46. Autrement dit, la dérivation 54 est équivalente à la quatrième face pleine du boîtier de l'exemple de la figure 2 et fait partie du boîtier 46 après assemblage de l'échangeur de chaleur 20.

Dans cet exemple, la dérivation 54 est sous la forme d'un tube 78, notamment brasé aux parois latérales du boîtier. Ainsi, le tube 78 forme le couvercle du boîtier 46.

La dérivation comporte en outre un moyen de renfort mécanique 80. Ce moyen de renfort peut être réalisé, par exemple, par une bande de tôle ondulée, dont les sommets des ondulations sont brasés lors du passage au four de l'échangeur de chaleur 20.

La figure 4 représente encore un autre mode de réalisation de l'échangeur de chaleur selon l'invention.

Ici, le faisceau est identique aux modes de réalisation précédents.

Le boîtier 46 présente cinq faces, à savoir trois faces pleines et deux faces ouvertes situées en vis-à-vis l'une de l'autre. Les trois faces pleines donnent au boîtier une forme en U.

La dérivation 54 forme, ici aussi, un couvercle pour le boîtier 46. Dans cet exemple, elle est formée d'au moins un élément en U 82 orienté dans le même sens que le U du boîtier et d'une paroi de fond 84 assemblés ensemble. Le volume de l'élément en U 82 est fermé par la paroi de fond 84 du boîtier 46.

Un mode de réalisation non représenté propose aussi que la dérivation comporte un moyen de renfort mécanique.

Un échangeur tel que décrit précédemment a, en outre, la particularité de présenter des longueurs, respectivement L1 et L2, de sorties du faisceau et la dérivation pour l'air de suralimentation sensiblement égales. On entend par « longueurs », la distance séparant les deux extrémités respectivement du faisceau ou de la dérivation dans une direction D1, la direction D1 étant perpendiculaire à la direction du flux d'air traversant l'échangeur de chaleur.

On favorise ainsi une homogénéisation de la température d'air d'admission. Un défaut d'homogénéisation pourrait avoir pour conséquence que seuls les premiers cylindres proches de la sortie de la dérivation se rempliront d'air de suralimentation pendant que les cylindres les plus éloignés de cette sortie ne seront pas alimentés en air. Un tel mode de fonctionnement du moteur n'est pas souhaitable car entraînant la formation de nombreux polluants. Avec la caractéristique proposée un tel inconvénient est évité.

La figure 5 représente un autre mode de réalisation de l'échangeur de chaleur selon l'invention.

Ici, le faisceau est identique aux modes de réalisation précédents.

Le boîtier 46 présente cinq faces, à savoir trois faces pleines et deux faces ouvertes situées en vis-à-vis l'une de l'autre. Les trois faces pleines donnent au boîtier une forme en U.

Un couvercle pour le boîtier 46 est également prévu.

Dans cet exemple, le couvercle est formé d'au moins un élément 90 muni d'au moins un créneau ou excroissance 92 définissant avec la dernière plaque du faisceau la dérivation 54. Ici, le créneau 92 présente une forme en U orientée dans le sens inverse que le U du boîtier 46.

Dans ce mode de réalisation, le faisceau 40 et la dérivation 54 comporte chacun une entrée et une sortie pour l'air du suralimentation. Ici, les entrées se situent sur une même face ouverte du boîtier 46 et les sorties se situent sur l'autre face ouverte du boîtier 46. Autrement dit, le créneau 92 s'étend, dans cet exemple, de manière sensiblement parallèle au faisceau 40 et sur toute la largeur de ce dernier. On entend ici par largeur, la distance séparant les boites collectrices d'entrée et de sortie de l'échangeur de chaleur 20.

Un mode de réalisation non représenté propose aussi que la dérivation comporte un moyen de renfort mécanique.

Dans ce mode de réalisation particulier de la figure 5, l'échangeur présente des longueurs, respectivement L1 et L2, de sorties du faisceau et de la dérivation pour l'air de suralimentation différentes. Ici aussi, on entend par « longueurs », la distance séparant les deux extrémités respectivement du faisceau ou de la dérivation dans une direction D1, la direction D1 étant perpendiculaire à la direction du flux d'air traversant l'échangeur de chaleur.

La présente description a été faite par rapport à un échangeur de chaleur et une dérivation où circule un gaz composé d'air de suralimentation. Toutefois, il est aussi possible que cet échangeur de chaleur et la dérivation voient passer un gaz composé d'un mélange d'air de suralimentation et de gaz d'échappement recirculés.

L'invention ne se limite pas aux modes de réalisation décrits ci avant, seulement à titre d'exemples, mais elle englobe toutes les variantes que pourra envisager l'homme de l'art dans le cadre des revendications ci-après. Les variantes décrites précédemment peuvent être prises séparément ou en combinaison les unes avec les autres.

## Revendications

1. Échangeur de chaleur comportant, d'une part, au moins un faisceau d'échange (40) de chaleur déterminant des premiers canaux pour la circulation d'un gaz et des seconds canaux pour la circulation d'un liquide de refroidissement et, d'autre part, un boîtier (46) à l'intérieur duquel est logé le faisceau (40), **caractérisé en ce que** ledit échangeur de chaleur (20) comporte en outre un espace formant une dérivation (54) apte à permettre la circulation dudit gaz sans échange thermique, ledit espace (54) étant défini au moins en partie par ledit boîtier (46).

2. Echangeur de chaleur selon la revendication 1, dans lequel ledit faisceau (40) est constitué par un empilement de plaques et comporte une plaque d'extrémité (52) dite dernière plaque.

3. Echangeur de chaleur selon la revendication précédente, dans lequel ledit boîtier (46) comporte une paroi dite de fond (50) et dans lequel ladite paroi de fond (50) dudit boîtier (46) et la dernière plaque (52) du faisceau (40) prévue en vis-à-vis de ladite paroi de fond (50) définissent ladite dérivation (54).

4. Echangeur selon l'une des revendications précédentes, dans lequel ledit boîtier (46) comporte au moins deux faces ouvertes (48-1 ; 48-2) permettant une interface avec des collecteurs (56 ; 58), respectivement, d'entrée et de sortie pour ledit gaz, lesdits collecteurs étant munis respectivement d'une tubulure d'entrée de gaz (60) et d'au moins une tubulure de sortie de gaz (76).

5. Echangeur selon la revendication précédente, comprenant ledit collecteur d'entrée (56) et dans lequel le collecteur d'entrée est une boite collectrice (56) divisée en un premier et un second compartiments (66 ; 68) prévus respectivement pour la circulation de l'air de suralimentation dans ledit faisceau (40) et dans ladite dérivation (54), lesdits deux compartiments (66 ; 68) étant séparés par une cloison (74).

6. Echangeur selon la revendication précédente, dans lequel le premier compartiment (66) dit du circuit d'échange permet une communication entre une tubulure d'entrée de gaz (60) et ledit faisceau d'échange de chaleur (40), et dans lequel le premier compartiment (66) est équipé d'une vanne (72), ladite vanne permettant d'autoriser ou d'interdire, en tout ou partie, le passage de l'air de suralimentation dans ledit faisceau (40).

7. Echangeur selon la revendication 5 ou 6, dans lequel le second compartiment dit circuit de dérivation (68) permet une communication entre la tubulure d'entrée de gaz 60 et la dérivation (54) et dans lequel ledit second compartiment (68) est équipé d'une vanne (70) permettant d'autoriser ou d'interdire, en tout ou partie, le passage de l'air de suralimentation dans la dérivation (54).

8. Echangeur de chaleur selon l'une des revendications précédentes, dans lequel ledit faisceau (40) et ladite dérivation (54) comporte chacun une entrée et une sortie pour ledit gaz et dans lequel lesdites entrées se situent sur une même face ouverte (48-1) dudit boîtier (46).

9. Echangeur de chaleur selon l'une des revendications précédentes, dans lequel ledit faisceau (40) et ladite dérivation (54) comporte chacun une entrée et une sortie pour ledit gaz et dans lequel lesdites sorties se situent sur une même face ouverte (48-2) dudit boîtier (46).

10. Echangeur de chaleur selon la revendication précédente, dans lequel ladite face ouverte (48-2) définit un plan et dans lequel lesdites sorties sont situées dans ledit plan

11. Echangeur de chaleur selon l'une des revendications précédentes, dans lequel ledit boîtier (46) est de forme parallélépipédique et comporte quatre faces pleines et deux faces ouvertes (48-1 ; 48-2) situées en vis-à-vis l'une de l'autre et comportant chacune au moins une ouverture pour l'entrée ou la sortie dudit gaz dans ledit échangeur de chaleur.

12. Echangeur selon l'une des revendications 1 à 10, dans lequel ladite dérivation (54) forme un couvercle dudit boîtier (46).

13. Echangeur selon la revendication 12, dans lequel ledit boîtier (46) comporte une forme en U et dans lequel ladite dérivation (54) comporte un tube (78) formant couvercle pour ladite forme en U.

14. Echangeur selon la revendication 12, dans lequel ledit boîtier comporte une forme en U et dans lequel ladite dérivation comporte au moins un élément en U (82) et une paroi de fond (84), ladite paroi de fond (84) fermant le volume dudit élément en U (82).

15. Echangeur selon l'une des revendications précédentes, dans lequel ladite dérivation comporte un moyen de renfort mécanique(80).
